# FASCICULE DE BREVET EUROPEEN

(11) **EP 2 842 768 B1**
(45) Date de publication et mention de la délivrance du brevet: **06.07.2016**
(21) Numéro de dépôt: 14002521.4
(22) Date de dépôt: 21.07.2014
(51) Int. Cl.: B60C 15/02, B60C 15/04, B60C 15/024

(54) **Pneumatique pour roue de vélo**
Reifen für Fahrrad-Rad
Tyre for bicycle wheel

(30) Priorité: 26.07.2013 FR 1301807
(43) Date de publication de la demande: 04.03.2015
(73) Titulaire: MAVIC S.A.S., 74370 Metz-Tessy (FR)
(72) Inventeur: Mercat, Jean-Pierre, 74650 Chavanod (FR)
(74) Mandataire: Rambaud, Pascal

(56) Documents cités:
- FR-A1- 2 829 969
- NL-C- 38 427
- US-B1- 6 237 662

## Description

La présente invention concerne une roue de cycle; notamment la présente invention concerne un pneumatique d'un genre nouveau pour une roue de cycle. La présente invention concerne également une jante prévue pour recevoir un pneumatique d'un genre nouveau.

Depuis le début du 20^{ième} siècle, on utilise les roues de cycle qui sont équipées de pneumatiques gonflés à l'air. Il existe actuellement deux familles de pneumatiques pour vélos: les pneumatiques tubulaires, appelés couramment "boyaux" et les pneumatiques à tringle, appelés "pneu" dans la langue courante. Ces deux grandes familles présentent chacune ses avantages et ses inconvénients.

Le document FR 778 744 décrit un boyau. Il comprend un anneau de tissus, qui peut être enduit de caoutchouc dont les deux bords sont cousus l'un avec l'autre pour constituer un tore. Avant la couture, une chambre à air est insérée à l'intérieur du tore. Une bande de roulement est ensuite collée à l'extérieur du tore. Le boyau est fixé à la jante par collage. Cette fixation est relativement bonne car la surface de collage est très importante. Cependant, l'échauffement du au freinage peut dans certains cas faire fondre la colle et engendrer des accidents.

Lorsqu'on monte un boyau sur une jante, celui-ci opère un léger frettage de la jante. Pour une roue à rayons tendus, le frettage a pour effet une perte d'environ 1 daN de la tension des rayons. Après gonflage à 8 bars du boyau, le frettage augmente légèrement et la perte de tension totale est d'environ 8 daN. Cette perte de tension est négligeable par rapport à la tension des rayons d'une roue qui peut atteindre 100 daN pour une roue de compétition cycliste. En fait, dans une roue équipée d'un boyau, la sollicitation exercée par le pneumatique et l'action de la pression de l'air sur la jante sont relativement faibles et quasiment négligeables. De plus cette sollicitation ne comporte pas de composante axiale.

Une roue équipée d'un boyau présente un énorme avantage, la légèreté. En effet, le boyau en lui-même est léger car sa forme torique lui permet avantageusement de résister à de forte pression de gonflage même avec une structure souple et légère. On peut évaluer la souplesse (rigidité) d'un boyau en n'en mesurant l'augmentation du diamètre lorsque on le soumet à une force donnée. De manière connue, cette rigidité radiale peut être mesurée en faisant reposer le boyau sur deux demi-cylindres et en enregistrant la loi qui régit l'effort nécessaire pour écarter radialement les deux demi-cylindres en fonction du déplacement imposé par l'écartement des deux demi-cylindres, cet enregistrement est idéalement fait en écartant puis en rapprochant les demi-cylindres et moyennés pour annuler l'effet des frottements, la rigidité est ensuite déterminée en calculant la pente moyenne de l'effort en fonction du déplacement. En règle générale, dans ce cadre, la rigidité radiale d'un boyau non gonflé est d'environ 1 daN/mm alors que le même boyau gonflé à 8 bars est d'environ 6 daN/mm.

De plus, comme la jante qui reçoit le boyau, n'est que peu sollicitée par ce-dernier, elle peut bénéficier d'une construction relativement plus légère. Cette grande légèreté du boyau en fait le choix exclusif de tous les cyclistes professionnels. Pourtant le boyau présente de nombreux inconvénients comme la complexité du collage/décollage sur la jante, la difficulté de réparation, son encombrement et son poids lorsque l'on doit emmener un boyau de secours pour pouvoir réparer, son coût nettement plus élevé que le pneu et les risques d'endommagement du boyau en cas de roulage à plat. Tous ces inconvénients ont pratiquement fait disparaître l'utilisation des boyaux pour les pratiques amateur et loisir du cyclisme.

L'autre grande famille de pneumatique, les pneumatiques à tringles répondent à un certain nombre des inconvénients des boyaux. Notamment ils facilitent le démontage/ remontage sur la jante. Le pneu à tringles n'est pas un tore fermé, comme le boyau, mais un tore ouvert, la partie supérieure de la jante (le pont supérieur et les ailes latérales) en assurant la fermeture. Les pneus à tringles, sont largement utilisés pour tous types de véhicules terrestres: vélo, moto, auto.

Le document US 6,237,662 B1 montre un pneumatique qui présent toutes les caractéristiques du préambule de la revendication 1.

Pour pouvoir fonctionner correctement, deux tringles non extensibles sont nécessaires. Ces tringles de par leur cerclage circonférentiel reprennent ainsi la quasi-totalité de la composante d'effort radial exercé par la pression de l'air sur la carcasse du pneumatique, ainsi lorsque un pneu est gonflé à 8 bars, la tension de chacune des tringles atteint environ 200 daN, ces tringles doivent ainsi être très résistantes pour ne pas se rompre sous la tension et la fatigue répétée du roulage, mais doivent aussi être très rigides pour ne pas trop se dilater sous l'action de la pression de l'air et ne pas risquer de déjanter en se dilatant et en passant alors par-dessus les bords externes de la jante. Ces tringles qui peuvent être en acier ou en matière composite sont lourdes. La paire de tringles d'un pneu de vélo de route peut peser entre 40 g et 100 g en fonction du matériau et de la section. A titre de comparaison avec celle d'un boyau, la rigidité d'un pneu comportant ses deux tringles est d'environ 80 daN/mm et elle peut atteindre 240 daN/mm pour les pneus tubeless, soit 13 à 40 fois plus qu'un boyau gonflé.

Dans le domaine du cycle, les premiers pneus à tringle se montaient sur les jantes à ailes droites, puis sont apparues les jantes à crochets. Le document FR 2 351 803 décrit une jante à crochet pour le montage avec des pneus à tringle. Structurellement, une jante pour pneu à tringle se doit d'être beaucoup plus résistante qu'une jante de même taille pour boyau et par conséquent beaucoup plus lourde. En effet, lorsqu'un pneu est gonflé à une pression de 8 bars, il sollicite radialement la jante dans une telle mesure qu'on peut observer une perte d'environ 30 daN de tension des rayons. Cette sollicitation radiale centripète est sensiblement proportionnelle à la largeur interne de la jante, à son diamètre et à la pression, en isolant mécaniquement le système pneu + jante on démontre que l'action radiale centripète de la pression de l'air sur la jante correspond sensiblement à l'opposé de l'action radiale centrifuge de la carcasse sur les tringles. Les ailes de la jante doivent également résister aux sollicitations axiales qu'exercent sur elles les talons du pneu et qui les poussent à s'ouvrir.

Enfin, comme les tringles sont inextensibles et qu'il faut, pour pouvoir monter et démonter le pneu, pouvoir faire passer celles-ci par-dessus les crochets, il est nécessaire qu'une gorge relativement profonde soit présente pour recevoir la portion de tringle diamétralement opposée à celle que l'on fait passer par-dessus le crochet. C'est pourquoi, les jantes prévues pour recevoir les pneumatiques à tringles ont une profondeur relativement importante, en général supérieure à 7,5 mm. Pour ne pas être trop sensible à la flexion, les parois de cette gorge profonde devront être plutôt épaisses et donc lourdes.

De façon générale dans une roue à rayons tendus équipée de pneus à tringles, la tension des rayons est dépendante de la pression de gonflage; plus la pression de gonflage augmente, plus la sollicitation du pneu sur la jante augmente et plus la tension diminue. Les roues à pneu doivent donc être surtendues à la fabrication afin d'obtenir la tension requise lorsque le pneu se trouve gonflé.

Sur les roues arrières de cycles, les nappes de rayons sont asymétriques et l'on observe que lorsque l'on fait varier la pression d'une telle roue équipée d'un pneumatique, la détente des deux nappes de rayons asymétriques provoque un léger décentrage de la jante, il convient donc aussi d'anticiper au mieux ce phénomène en compensant par un déport initial opposé lors de la fabrication de la roue.

Lors d'une crevaison avec une roue à pneu, la perte de pression est généralement très rapide car la jonction entre la jante et le pneu n'est pas prévue pour être étanche, cette perte de pression subite peut-être très dangereuse particulièrement en montagne lors de descente de cols. De plus, lorsque la pression du pneu est devenue nulle, il est très fréquent que le pneu déjante, ce qui provoque souvent une totale perte de contrôle du cycle contrairement au boyau qui reste collé à la jante.

Outre la facilité de montage, les pneumatiques à tringles permettent également, dans certaines conditions, un montage "tubeless". Le document FR 2 829 969 décrit une roue "tubeless". Cette dernière solution présente l'avantage de limiter le nombre de crevaisons en supprimant presque totalement celles dues aux pincements, mais également d'en atténuer les effets car le dégonflage se produit plus lentement. Cependant, le poids total de la roue est encore plus important avec une roue sans chambre à air qu'avec une roue avec chambre. En effet, d'une part les tringles doivent être beaucoup plus rigides et donc plus lourdes et d'autre part la jante doit être plus résistante et avoir un profil compatible avec l'étanchéisation primaire lors du gonflage. On peut noter dans ce document que les gorges qui reçoivent les talons du pneu sont très profondes, allant jusqu'à représenter la moitié de la hauteur de jante.

Le handicap de poids dont souffrent les roues et pneus à tringles, en général, et les roues tubeless, en particulier, ont pour conséquence qu'aucun cycliste professionnel sur route ou sur piste n'utilise des pneus à tringle et que, même, dans le cyclotourisme sur route, on utilise que très rarement des pneus sans chambre. En fait, l'utilisation des pneus sans chambre se cantonne pour l'instant au domaine du vélo tout terrain, domaine dans lequel le poids de l'équipement est moins critique que dans le domaine du cyclisme sur route.

L'objectif de l'invention est de remédier aux inconvénients de l'art antérieur.

L'objectif de l'invention est notamment de réaliser une roue pour cycle, pour la pratique du vélo de route comme pour celle du VTT qui soit aussi légère qu'une roue à boyau, et qui soit aussi pratique qu'une roue à pneumatique ouvert. L'invention vise à proposer une roue de cycle légère à l'utilisation simplifiée.

Les objectifs de l'invention sont atteints par la fourniture d'un pneumatique pour cycle comportant une enveloppe et deux talons placés sur les deux bords latéraux de l'enveloppe, ledit pneumatique ayant la forme d'un tore ouvert et définissant un volume intérieur; l'un au moins des deux talons présentant un épaulement faisant saillie vers le côté extérieur depuis la portion de l'enveloppe qui lui est adjacente et une béquille placée selon un plan radial à une deuxième extrémité du talon; ledit épaulement étant placé, selon un plan radial, à une première extrémité du talon, et comportant à sa surface extérieure une première surface d'appui et un rebord; ladite première surface d'appui étant placée entre ledit rebord et ladite enveloppe et ladite surface d'appui étant placées en retrait par rapport audit rebord; ladite béquille comportant une deuxième surface d'appui placée sur le côté intérieur.

De préférence, le pneumatique selon l'invention présente toute combinaison techniquement acceptable des caractéristiques suivantes:
- dans un plan radial, la direction normale à la première surface d'appui est sensiblement tangente à l'enveloppe,
- le talon est sensiblement non déformable,
- la profondeur du retrait de la première surface d'appui par rapport au rebord de l'épaulement supérieure à 0,2 mm,
- le module longitudinal du talon, ou le module équivalent des différents éléments constituant le talon est inférieur à 2000 MPa,
- le module transversal du talon ou le module équivalent des différents éléments constituant le talon est supérieur à 50 Mpa, de préférence supérieur à 100 MPa,
- la direction normale à la deuxième surface d'appui fait avec la direction normale de la première surface d'appui un angle compris entre 70° et 110°, de préférence entre 75° et 105°,
- le talon a, selon un plan radial, une section allongée dans laquelle la plus grande extension du talon est supérieure à 1,6 fois son épaisseur,
- la section du talon a une forme sensiblement triangulaire dans laquelle l'épaisseur du talon au niveau de l'épaulement est plus importante que celle au niveau de la béquille,
- le talon comporte une âme annulaire dont le module longitudinal est inférieur à 2000 MPa et dont le module transversal est supérieur à 50 MPa, de préférence supérieur à 100 MPa,
- l'enveloppe du pneumatique comprend au moins un panneau de fibres noyées dans un caoutchouc; et ledit panneau enveloppe au moins partiellement ladite âme et en ce que le module transversal équivalent du talon ainsi constitué de l'âme et du panneau est supérieur à 50 MPa, de préférence supérieur à 100 MPa,
- un renfort radial enveloppe, au moins partiellement, l'âme; ledit renfort radial comportant une pluralité de fibres parallèles les unes aux autres et orientées dans un plan radial,
- l'âme est réalisée en un matériau dont la densité est inférieure à 2,
- le talon est une pièce indépendante de l'enveloppe qui est solidarisée à cette dernière par couture, collage ou soudure,
- le talon comporte une chape servant à le fixer sur l'enveloppe, ladite chape présentant dans un plan radial une hauteur comprise entre 4 et 15 mm, de préférence comprise entre 6 et 13 mm,
- la chape du talon s'insère en sandwich à l'intérieur de l'enveloppe,
- le matériau du talon a un module compris entre 50 et 2000 MPa,
- le matériau du talon a une dureté shore D supérieure à 40,
- le matériau du talon a une densité inférieure à 2,
- la rigidité radiale du pneumatique est inférieure à 8 daN/mm,
- la largeur de pneu est comprise entre 18 mm et 60 mm,
- le pneumatique est symétrique par rapport à un plan médian et les deux talons sont identiques.

Les objectifs de l'invention sont également atteints par la fourniture d'une jante pour roue de cycle d'axe (A) et ayant un plan médian (M) perpendiculaire audit axe, ladite jante comportant un pont supérieur et au moins une aile latérale gauche issue dudit pont supérieur et s'étendant radialement vers l'extérieur de façon à s'éloigner de l'axe, ledit pont supérieur comprenant un butoir placé du même côté que ladite aile latérale gauche par rapport au plan médian, de telle façon que ladite aile latérale gauche et ledit butoir délimitent une gouttière gauche ouverte vers le haut; ladite aile latérale gauche se prolongeant par un crochet faisant saillie radialement vers l'axe et axialement vers le plan médian de façon à se rapprocher de l'axe et du plan médian. Selon un plan radial, l'amplitude de l'ouverture de ladite gouttière, définie par la distance séparant le crochet du butoir est inférieure à la plus grande amplitude de la gouttière.

De préférence, la jante selon l'invention présente toute combinaison techniquement acceptable des caractéristiques suivantes:
- l'extrémité basse du crochet est séparée de l'aile latérale gauche de telle façon qu'une portion du volume intérieur de la gouttière se trouve radialement plus à l'extérieur que l'extrémité basse du crochet,
- la profondeur de la gouttière mesurée entre le sommet du crochet et le fond de la gouttière est inférieur à 6 mm, de préférence inférieure à 5 mm,
- la face frontale du crochet comporte une première surface de butée et la face frontale du butoir comporte une deuxième surface de butée et en ce que la direction normale de la première surface de butée fait avec la direction normale de la deuxième face de butée un angle compris entre 75° et 105°,
- l'amplitude radiale du pont supérieur, qui correspond à la différence de diamètre entre la portion du pont supérieur la plus proche de l'axe (A) et la portion de la jante la plus éloignée de l'axe (A), est inférieure à 7 mm, de préférence inférieure à 6 mm,
- l'extension axiale du volume de la gouttière placée sous le crochet est supérieure à 0,6 mm, de préférence supérieure à 0,8 mm,
- l'extension axiale du volume de la gouttière placée sous le butoir est supérieure à 0,8 mm, de préférence supérieure à 1 mm.selon un plan radial, la première surface de butée est un segment de droite,
- selon un plan radial, la deuxième surface de butée est un segment de droite,
- selon un plan radial, la première surface de butée est un arc de cercle,
- selon un plan radial, la deuxième surface de butée est un arc de cercle,
- la jante est symétrique par rapport au plan médian et comprend un crochet, un butoir et une gouttière droite,
- la jante est au moins partiellement réalisée en alliage d'aluminium,
- la jante est au moins partiellement réalisée en matériau composite,
- la jante selon l'invention se caractérise également par la plus grande extension des gouttières dont l'amplitude est inférieure 8 mm,
- la largeur de jante est comprise entre 18 mm et 40 mm.

Mais encore, l'objectif de l'invention est également atteint par la fourniture d'une roue pour cycle d'axe (A) ayant un plan médian (M) perpendiculaire audit axe (A), ladite jante comportant une jante et un pneumatique, dans laquelle:
- ladite jante comprend un pont supérieur et au moins une aile latérale gauche issue dudit pont supérieur et s'étendant radialement vers l'extérieur de façon à s'éloigner de l'axe (A), ledit pont supérieur comprenant un butoir placé du même côté que ladite aile latérale gauche par rapport au plan médian, de telle façon que ladite aile latérale gauche et ledit butoir délimitent une gouttière gauche, ladite gouttière gauche ayant selon un plan radial une ouverture d'amplitude (a), une plus grande extension (c) supérieure à ladite ouverture et une section d'aire (Sg),
- ledit pneumatique comportant une enveloppe et au moins un talon gauche, qui a, selon un plan radial, une plus grande extension (d), une épaisseur (e) inférieur à (d) et dont la section a une aire (St),
- la plus grande extension du talon (d) est supérieure à l'amplitude (a) de l'ouverture,
- l'épaisseur (e) du talon est inférieure ou égale à l'amplitude (a) de l'ouverture,
- l'aire de la section du talon (St) est inférieure à l'aire de la section de la gouttière (Sg),
- le talon présente un module transversal compris entre 50 et 2000 MPa.

De préférence, l'aile latérale gauche se prolonge par un crochet faisant saillie radialement vers l'axe (A) et axialement vers le plan médian (M) de façon à se rapprocher de l'axe (A) et du plan médian (M); ledit talon présente un épaulement faisant saillie vers le côté extérieur depuis la portion de l'enveloppe qui lui est adjacente, ledit épaulement étant placé, selon un plan radial, à une première extrémité du talon; si bien que lorsque le pneu est gonflé l'épaulement vient en contact avec le crochet.

De préférence, la face frontale du crochet comporte une première surface de butée; l'extrémité basse du crochet est séparée de l'aile latérale gauche de telle façon qu'une portion du volume intérieur de la gouttière se trouve radialement plus à l'extérieur que l'extrémité basse du crochet; ledit épaulement comporte à sa surface extérieure une première surface d'appui et un rebord, ladite première surface d'appui étant placée entre ledit rebord et ladite enveloppe et ladite surface d'appui étant placée en retrait par rapport audit rebord; si bien que, lorsque le pneumatique est gonflé la première surface d'appui est en appui contre la première surface de butée et le rebord est reçu dans le volume supérieur de la gouttière.

De préférence, la face frontale du butoir comporte une deuxième surface de butée dont la direction normale (A₃₇) fait avec la direction normale (A₃₅) de la première surface de butée un angle compris entre 75° et 105°; ledit talon comporte une béquille placée selon un plan radial à une deuxième extrémité du talon et comportant une deuxième surface d'appui placée sur le côté intérieur; la direction normale (A₃₅) de la première surface de butée faisant avec la direction normale (A₃₇) de la deuxième surface de butée un angle compris entre 75° et 105° et la direction normale (A₆₇) à la deuxième surface d'appui faisant avec la direction normale (A₆₅) de la première surface d'appui un angle compris entre 75° et 105°.

L'invention sera mieux comprise à la lecture de la description et du dessin annexé dans lequel:
- La figure 1 représente une vue d'une roue selon un premier mode de réalisation de l'invention.
- La figure 2 représente une vue en coupe selon un plan radial de la roue du premier mode de réalisation de l'invention.
- La figure 3 représente une vue de détail de la figure 2 représentant une partie de la jante.
- La figure 4 représente une vue de détail de la figure 2 représentant une partie du pneumatique.
- La figure 5 représente une vue de détail de la figure 2 montrant l'équilibre des forces entre le pneumatique et la jante.
- Les figures 6a-6g représentent des vues de détail montrant les différentes phases de la mise en place du talon dans la gouttière.
- La figure 7 représente une vue de la roue du premier mode de réalisation en situation de talonnage.
- Les figures 8a, 8b, 8c, 8d représentent des vues de version alternative du talon d'un pneumatique selon l'invention.
- La figure 9 représente une vue en coupe selon un deuxième mode de réalisation de l'invention.
- La figure 10 représente une vue en coupe selon un troisième mode de réalisation de l'invention.
- La figure 11 représente une vue de détail en perspective éclatée du talon du pneumatique selon la troisième mode de réalisation de l'invention.
- La figure 12 représente une variane du troisième mode de réalisation de l'invention.
- Les figures 13, 14 et 15 représentent une roue selon un quatrième mode de réalisation de l'invention.

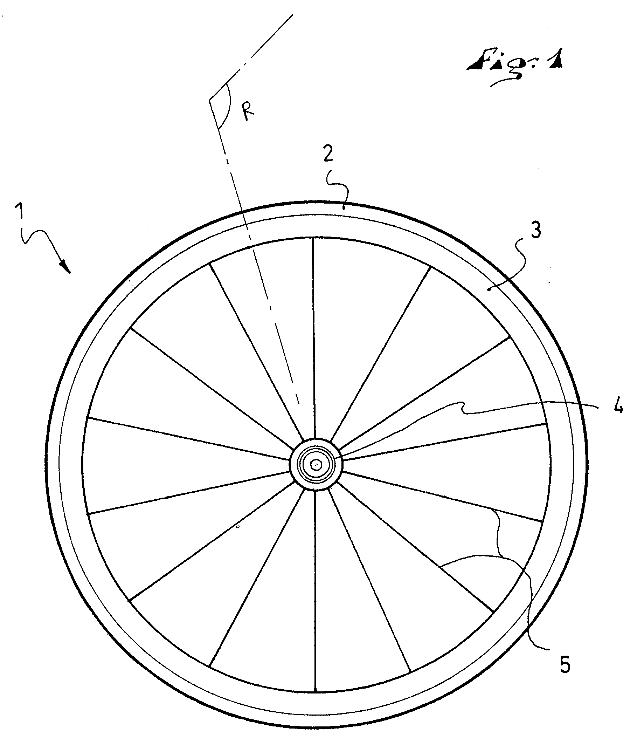

La figure 1 décrit une roue 1 selon l'invention. Cette roue comprend un pneumatique 2 et une jante 3 conforme à l'invention ainsi qu'un moyeu 4 et des rayons 5. Le cadre de l'invention ne se limite pas aux roues équipées de rayons tendus car des roues à bâtons ou lenticulaires conformes à l'invention sont également envisageables. Il s'agit d'une roue pour cycle. A la différence notamment des roues pour l'automobile, les roues pour cycles, se caractérisent par une plus grande légèreté et par une pression de gonflage du pneumatique pouvant être beaucoup plus importante. En effet, la masse d'une roue de cycle dépasse rarement quelques kilogrammes (entre 1 et 4 kg) quand une roue pour automobile ne descend jamais en dessous de 10-15 kg. L'invention s'applique particulièrement au domaine des roues de vélos pour la compétition, et notamment pour la compétition sur route. En effet, dans ce cadre, le poids d'une roue complète est inférieur à 2 kg et à 1 kg pour les plus performantes, tandis que les pressions de gonflage atteignent 10 bars alors qu'elles sont inférieures à 3 bars dans les domaines automobile et motocycles.

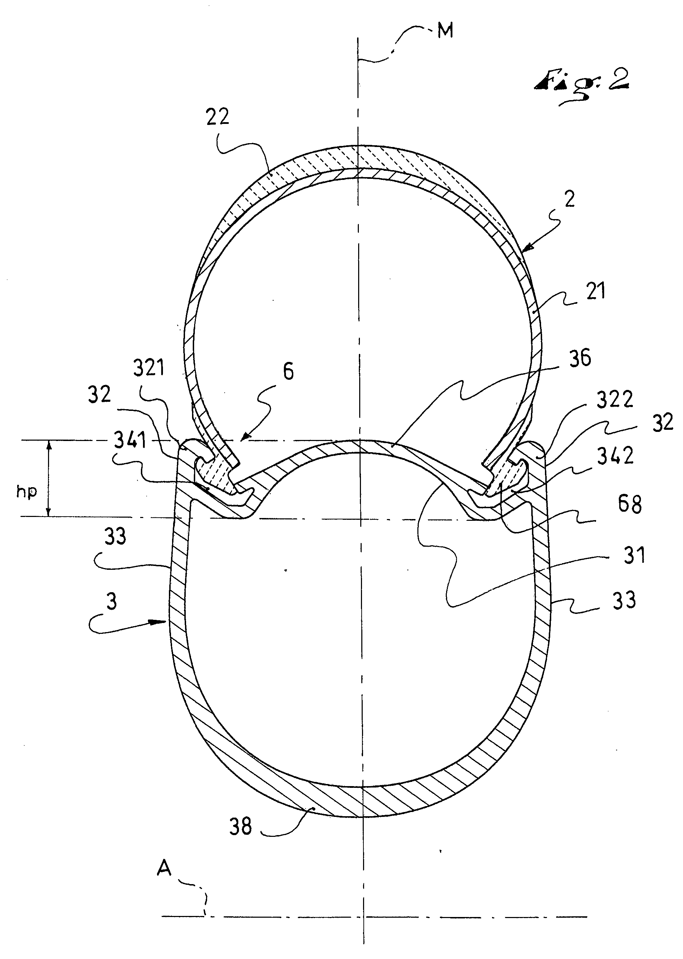

La figure 2 montre une section dans un plan radial (R) d'une roue selon un premier mode de réalisation de l'invention. La figure 2 et la majorité des vues suivantes sont des coupes réalisées dans le plan radial (R). Dans le cadre de cet exposé, on appelle plan radial (R) tout plan dans lequel est inclus l'axe (A) de la roue. La jante 3 est constituée de manière connue par un tore fermé d'axe (A), l'axe de la roue. Ce tore est symétrique par rapport à un plan médian (M). Il est délimité par un pont inférieur 38, un pont supérieur 31, deux parois latérales 33. Au-dessus de ce tore est ménagée la zone d'interface avec le pneumatique. Cette zone d'interface comprend deux ailes latérales 32 qui prolongent les parois latérales et un pavé central 36. Le pavé 36 est constitué par la portion centrale du pont supérieur qui fait saillie vers le haut par rapport aux portions latérales du pont supérieur. On notera que dans toute la description qui suit, les notions d'orientation que sont "vers le haut" et "vers le bas" font référence à la section de la roue représentée à la figure 2. Par conséquent, "vers le haut" indique une direction radiale qui s'éloigne de l'axe (A) de la roue, tandis que "vers le bas" indique une direction radiale qui s'en rapproche. De la même manière, l'orientation "vers l'intérieur" correspond à une direction axiale qui se rapproche du plan médian (M) de la roue, alors que "vers l'extérieur" correspond à une direction axiale qui s'éloigne du plan médian (M).

Une gouttière gauche 341 est ainsi définie entre le pavé 36 et l'aile latérale gauche 321. De manière symétrique une gouttière droite 342 est définie entre le pavé 36 et l'aile latérale droite 322.

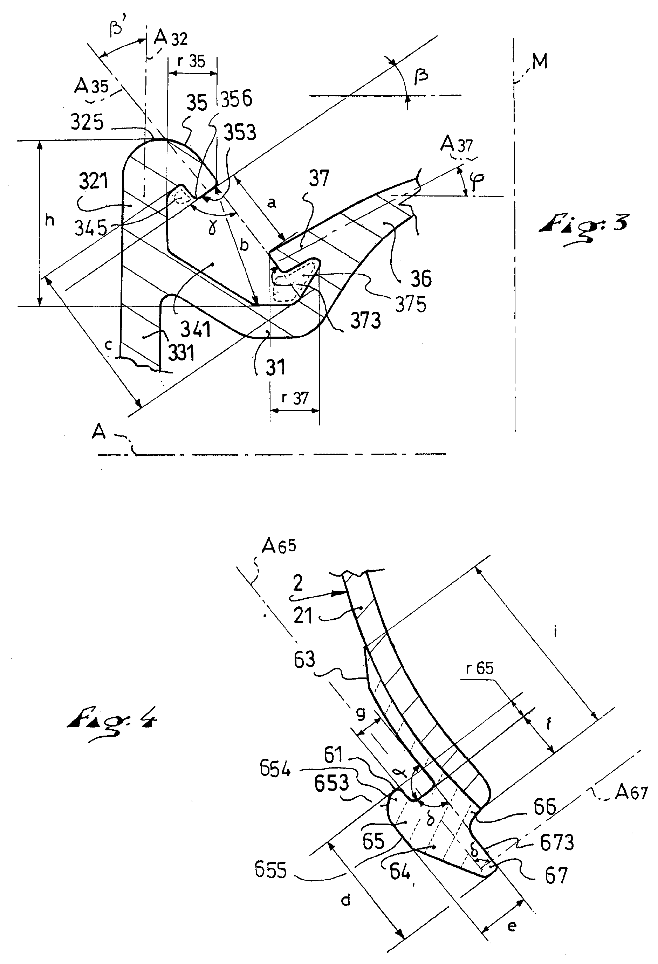

La figure 3 est une vue de détail de la figure 2, montrant la gouttière gauche 341. Celle-ci constitue un volume torique semi-fermé délimité par la face interne de l'aile gauche 321, le dessus de la portion latérale gauche du pont supérieur 31 et le pavé 36. L'aile gauche 321 se prolonge par un crochet 35 qui est orienté vers le bas et vers l'intérieur. Dans le mode de réalisation représenté ici, l'aile gauche 321 qui s'étend vers le haut depuis la jonction entre la paroi latérale gauche 331 et le pont supérieur 31 réalise un coude vers le bas pour réaliser le crochet 35. Le crochet se termine par une face frontale qui constitue une première surface de butée 353. Cette première surface de butée 353 est une surface tronconique dont l'intersection avec un plan radial est un segment de droite qui fait avec l'axe de la roue (A) un angle β [béta] compris entre 10° et 80°. On définit, l'axe (A₃₅) comme la direction perpendiculaire à la première surface de butée 353. Dans le mode de réalisation décrit ici, la face frontale du crochet est perpendiculaire à ce dernier si bien que l'axe (A₃₅) correspond également à l'axe d'orientation du crochet 35. L'angle β' (beta') que font entre eux, dans le plan de coupe radial, l'axe (A₃₂) de l'aile gauche 321, et l'axe (A₃₅) de l'orientation du crochet 35 est sensiblement égal à l'angle β (beta) car, d'une part, les ailes 32 sont sensiblement verticales et, d'autre part, la première surface de butée 353 est perpendiculaire à l'axe (A₃₅).

Le pavé 36, se termine dans sa partie gauche par un butoir 37. Celui-ci présente une deuxième surface de butée 373 qui est tronconique et dont l'intersection avec un plan radial est un segment de droite qui fait un angle γ (gamma) avec la première surface de butée 353. De préférence, l'angle γ (gamma) est compris entre 70° et 110°. Dans le mode de réalisation décrit ici, l'angle γ (gamma) est égal à 90°.

On définit l'axe (A₃₇) comme la direction perpendiculaire à la deuxième surface de butée 373 De préférence, l'axe (A₃₇) fait avec l'axe (A) de la roue un angle φ (phi) compris entre 30° et 80° Comme il est mentionné plus haut, la gouttière gauche 341 est un volume torique semi-fermé dont l'ouverture est réalisée entre le crochet 35 et le butoir 37. Cette ouverture se fait par le haut et vers l'intérieur, c'est-à-dire en direction du plan médian de la roue. En effet, le butoir 37 est placé plus bas et plus à l'intérieur par rapport au crochet 35. L'amplitude de l'ouverture, donnée par la distance (a) séparant le crochet 35 du butoir 37, est inférieure à la plus grande extension (c) de la gouttière 34. Dans le mode de réalisation décrit ici, la plus grande extension de la gouttière correspond à la distance séparant le creux du coude de l'aile gauche 321 et le fond côté intérieur de la gouttière gauche 341. Cette distance (c) vaut ici environ 4,5 mm, tandis que la distance (a) vaut 2,2 mm.

Une partie du volume intérieur de la gouttière est placée au dessus, radialement, par rapport à l'extrémité basse 356 du crochet 35. En effet, l'extrémité basse du crochet est séparée et ne vient pas au contact de la face interne de l'aile latérale gauche, si bien qu'un espace est créé entre le crochet et l'aile latérale. On appelle cet espace volume supérieur 345 de la gouttière. L'extension axiale, (r₃₅), du volume de la gouttière placée sous le crochet 35 est supérieure à 0,6 mm, de préférence supérieure à 0,8 mm.

Une autre partie du volume intérieur de la gouttière est placée sous le butoir 37, on appelle cet espace le volume de montage 375 de la gouttière. Le volume de montage est placé en deça de la deuxième surface de butée 373 par rapport au plan médian (M). l'extension axiale (r₃₇) du volume de montage 375 est supérieure à 0,8 mm, de préférence supérieure à 1 mm.

La jante selon l'invention se caractérise par une faible profondeur des gouttières gauche et droite au regard de sa hauteur. En effet, la profondeur (h), qui correspond à la différence d'élévation entre le fond des gouttières et le sommet 355 des ailes latérales 32, est inférieure à 30% de sa hauteur (H), de préférence à 25%. En valeur absolue, la profondeur (h) d'une jante selon l'invention est inférieure à 6 mm, de préférence inférieur à 4,5 mm.

La jante selon l'invention se caractérise également par l'absence d'une gorge profonde dans la partie centrale du pont supérieur et de manière plus générale par la faible amplitude radiale du pont supérieur. On appelle (hp), l'amplitude radiale du pont supérieur qui correspond à la différence de diamètre entre la portion du pont supérieur la plus proche de l'axe (A) de la roue et le diamètre de la portion de la jante la plus éloignée de l'axe (A). Dans le premier mode de réalisation, la portion du pont supérieur la plus proche de l'axe est constituée par le fond des gouttières et la portion de la jante la plus éloignée est constituée par le sommet du pavé central ainsi que le sommet des ailes latérales. Comme il est expliqué dans le préambule cette amplitude radiale a un effet non négligeable sur le poids total de la jante car plus cette amplitude est importante, plus les parois du pont supérieur devront être importantes. Dans une jante selon l'invention on peut réduire cette amplitude dans des proportions jamais atteintes pour la fabrication de jantes métalliques pour les vélos de course. L'amplitude (hp) est inférieure à 7 mm, de préférence inférieure à 6 mm. On pourra raisonnablement envisager une jante dont l'amplitude (hp) est d'environ de 4 mm.

Comme on peut le voir aux figures 1 et 2, le pneumatique 2 a la forme d'un tore ouvert. Il comprend une enveloppe souple 21 et deux talons 6. L'enveloppe 21, est surmontée par une bande de roulement 22. Dans le mode de réalisation décrit ici, l'enveloppe 21, la bande de roulement 22 et les talons sont des pièces différentes cousues et/ou collées les unes aux autres. On verra plus loin qu'il est possible de réaliser ces éléments en une seule pièce.

La figure 4 est une autre vue de détail de la figure 2, montrant partiellement le pneumatique 2. Le talon gauche 61 qui y est représenté est entièrement constitué par une âme 68 distincte du reste de l'enveloppe 21. Cette âme a une section non-circulaire, dont la forme précise est détaillée ci-dessous. L'âme 68 se compose d'un appendice 64, d'une chape 63 servant à fixer l'âme 68 à l'enveloppe 21 et d'un socle 66 qui relie la chape 63 et l'appendice 64. L'appendice 64 comprend, à une première extrémité, un épaulement 65 faisant saillie vers l'extérieur du pneumatique, et à l'autre extrémité, une béquille 67. La surface externe de l'épaulement 65 comprend une surface qui fait, avec la portion de l'enveloppe 21 qui lui est adjacent, un angle α (alpha) compris entre 75° et 105°. Cette surface constitue la première surface d'appui 653 du talon. De préférence et dans le mode décrit ici, l'angle α (alpha) est sensiblement égal à 90°. Dans le plan de coupe, l'axe (A₆₅) qui correspond à la direction perpendiculaire à la première surface d'appui 653 en son milieu est sensiblement tangent à l'enveloppe 21. La portion d'extrémité de l'épaulement 65 constitue un rebord 654. La première surface d'appui 653 est en retrait par rapport au rebord 654 et la chape 63 qui l'encadrent. La valeur r₆₅, mesure la profondeur du retrait de la première surface d'appui 653. De préférence la valeur r65 est supérieure à 0,2 mm, de préférence supérieure à 0,3 mm.

La surface de la béquille 67 qui fait face au volume intérieur du pneu est sensiblement lisse et elle constitue une deuxième surface d'appui 673 du talon. L'axe (A₆₇) est la direction normale à la deuxième surface d'appui. Entre la première 653 et la deuxième 673 surface d'appui du talon, l'angle δ (delta) est compris entre 70° et 110°. L'angle δ (delta) se retrouve également entre les axes (A₆₅) et (A₆₇) dans la mesure où, dans ce mode de réalisation, l'intersection des première et deuxième surfaces d'appui avec le plan radial sont des droites.

Une face de guidage 655 est placée sous l'épaulement 65. Cette face est sensiblement parallèle avec la deuxième surface d'appui 673.

La distance (d) correspondant à la plus grande extension de l'appendice 64, entre l'épaulement 65 et l'extrémité de la béquille 67, est plus grande que l'épaisseur (f) du socle 66. Dans le mode de réalisation décrit ici, (d) qui vaut 3,4 mm est plus de deux fois plus grande que (f) qui vaut 1,2 mm.

Le talon a sensiblement une forme triangulaire allongée, la zone de l'épaulement ayant une épaisseur plus importante de la zone de la béquille.

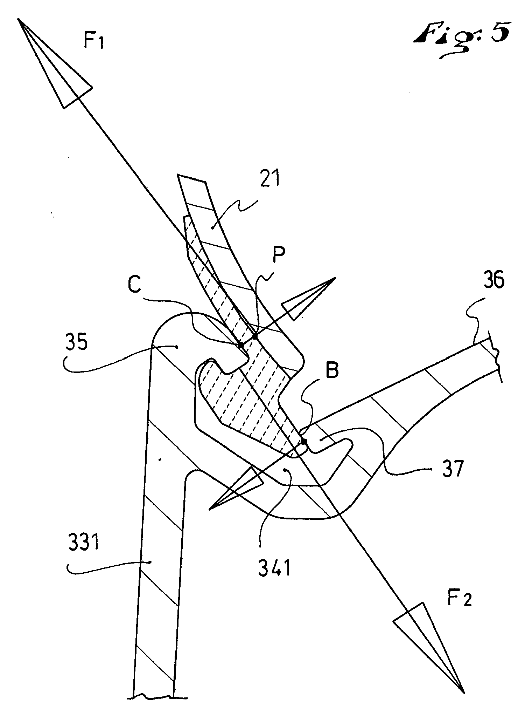

La longeur de la chape définit approximativement la hauteur d'interface de collage (i) entre le talon et l'enveloppe. Cette hauteur est suffisamment importante pour que cette interface puisse résister aux contraintes auxquelles elle est soumise. En particulier, le gonflage du pneumatique induit des contraintes de cohésion, notamment au cisaillement dans la chape du talon et la carcasse de l'enveloppe du pneumatique. Ces contraintes de cisaillement augmentent avec la pression de gonflage du pneumatique et diminuent avec la longueur de l'interface de liaison mesurée dans une section radiale. En pratique, on préférera donner à la chape et/ou à l'interface de collage une hauteur (i) supérieure à 4 mm. Cependant, pour éviter de rigidifier trop le pneu, on préférera limiter la hauteur (i), notamment à une valeur de 15 mm. On obtient de bons résultats avec une chape dont la hauteur est comprise entre 6 et 13 mm. La figure 5 représente les forces linéiques (force par unité de longueur tangentielle) en présence au niveau de l'interface jante/pneumatique lorsque celui-ci est gonflé à une pression de 10 bars. La force de cohésion F₁ correspond à la force subit par le pneumatique du fait de la pression de gonflage. Cette force est d'environ 12,5 N/mm (pour un pneu de 23 mm), elle s'applique tangentiellement à l'enveloppe, au point P. Elle est principalement reprise par la réaction du crochet F₂ qui s'applique au point C. Le décalage des points P et C crée un moment qui est repris par la réaction du butoir qui s'exerce au point B.

Avantageusement dans une roue conforme à l'invention; la force de cohésion s'exerçant à la partie basse du pneumatique est principalement reprise par la jante et non par la tringle comme c'est le cas dans un pneumatique à tringle tel qu'on les connaît dans l'art antérieur. De ce fait la pression de l'air s'exerçant de façon centripète sur le pont supérieur 31 et son pavé 36 se trouve ainsi compensée et équilibrée radialement par l'action centrifuge du pneu sur les crochets de la jante, annulant ainsi la déformation de la jante et la détente des rayons sous l'effet de la pression de l'air.

Le talon du pneumatique de l'invention doit donc respecter un certain nombre de caractéristiques pour que la roue résiste à une pression de gonflage de 10 bars. Le talon constitue une portion de membrane qui doit notamment résister à une flexion transversale, qui a tendance à le déformer jusqu'à ce que la béquille fléchisse et que le talon se désengage de la gouttière. La rigidité en flexion d'une membrane d'épaisseur (e) est caractérisée par le produit (Pr) de son module (E) multiplié par l'épaisseur au cube "Pr = E.e³". Pour des raisons de limitation de masse totale du pneumatique, on choisit de se limiter pour le talon à une épaisseur (e) à 3,5 mm, de préférence inférieure à 3 mm. Du fait de la présence de l'épaulement, l'épaisseur (e) est de toute façon supérieure à 1 mm, de préférence supérieure à 2 mm.

La résistance à la flexion transversale souhaitée pour le talon selon l'invention se caractérise par un produit (Pr) supérieur à 800 N.m, de préférence supérieur à 2000 N.m. Par conséquent, il faudra pour le talon que le module transversal soit supérieur à 50 MPa, de préférence supérieur à 100 Mpa.

D'autre part, le talon doit également présenter une résistance à la traction telle qu'il ne se déchire pas sous l'effet de la pression de gonflage. Le talon et, notamment, le socle 66 sont soumis à de très fortes contraintes de cisaillement. Dans l'exemple décrit ici, les contraintes de cisaillement dans le socle 66 atteignent 7,5 MPa. Il faut en outre rappeler que pour des raisons de commodité, les pneumatiques pour cycles sont maintenant entreposés et commercialisés pliés et qu'il est nécessaire qu'ils puissent être dépliés sans dommage avant l'utilisation. Pour que le retour à la forme d'utilisation se fasse sans problème après pliage, le talon doit présenter un allongement au seuil et une résistance à la traction suffisante. Pour toutes ces raisons, on doit concevoir un talon dont la résistance à la traction est d'au moins 15 Mpa.

Comme on le verra plus loin, le montage et le démontage des pneus nécessitent une extension radiale du pneumatique et de fait une certaine souplesse radiale du talon. Le module longitudinal du talon qui caractérise la possibilité d'étirer le pneumatique de façon à en agrandir légèrement le diamètre est inférieur à 2000 MPa, donnant ainsi une raideur du pneumatique de préférence inférieure à 5 daN/mm (La raideur est aussi proportionnelle à la section du talon) pour que le montage du pneu soit aisé.

Dans le premier mode de réalisation, le talon est intégralement constitué par l'âme 68 et cette dernière est faite d'un seul matériau. Les valeurs d'encadrement des modules mentionnées ci-dessus s'appliquent directement à la matière constituant l'âme. Nous verrons par la suite que l'invention ne se limite pas à une telle réalisation. En effet, on pourra envisager la construction du talon et de l'âme du talon avec deux ou plusieurs matériaux. Par exemple, le talon peut comprendre en plus d'une âme ayant les propriétés qui sont mentionnées précédemment pour le talon complet une ou plusieurs couches la recouvrant complètement ou partiellement. Par exemple, cette âme peut être recouverte d'un tissu, d'une fine couche d'élastomère ou de caoutchouc. Cette âme n'est pas équivalente à une tringle, souple ou rigide, telles que celles qui sont actuellement utilisées pour la fabrication des pneus, et notamment des pneus de vélo. En effet, son module longitudinal doit être tel qu'il permet de monter le pneumatique par extension de son diamètre sur une jante conforme à l'invention, c'est-à-dire une jante peu profonde. En revanche son module transversal doit être tel que le talon ne se déformera pas exagérément et résistera aux contraintes de flexion et de cisaillement auxquelles il est soumis. Dans les cas où le talon est une structure composite ayant plusieurs constituants, les modules mentionnés plus haut correspondent aux modules équivalents des structures composites. Les modules équivalents résultent d'un calcul prenant en compte tous les composants du talon, leurs géométries et caractéristiques intrinsèques et donnant une déformation équivalente avec un matériau équivalent homogène.

L'âme du talon est peut être entièrement réalisée dans un seul matériau et ce matériau doit présenter un certain module d'élasticité transversal, c'est-à-dire selon un plan radial. C'est particulièrement important dans la mesure où l'épaulement 65 et la béquille 67 vont être à l'usage soumis à de la flexion, tandis que le socle 66 est soumis à de très forte contrainte de cisaillement. Dans l'exemple décrit ici les contraintes de cisaillement dans le socle 66 atteignent environ 7,5 MPa à une pression de 10 bars. En revanche, le matériau constituant l'âme du talon aura un module longitudinal, qui est largement inférieur à celui de l'acier ou des fibres (par exemple kevlar) qui sont habituellement utilisés pour réaliser les tringles des pneumatiques. En pratique, on choisira un matériau de module transversal supérieur à 50 MPa, de préférence supérieur à 100 MPa.

Un matériau adapté à la fabrication de l'âme du talon, ou au talon lui-même, selon l'invention est un matériau de module compris entre 50 et 2000 MPa soit au moins 50 fois plus rigide qu'un caoutchouc naturel et au plus 100 fois moins rigide que l'acier qui sont tous deux des matériaux de référence utilisés dans la fabrication des pneumatiques. Il présente en outre une résistance à la traction supérieure à 15 MPa.

On obtient de bons résultats avec des matériaux dont le module est compris entre 100 et 2000 MPa.

De préférence, ce matériau présente une dureté shore D supérieure à 40 (module de 100 MPa env.). Les pneumatiques pour cycles sont actuellement réalisés avec des caoutchoucs de dureté 60 à 70 Shore A, ce qui correspond sensiblement à un module d'élasticité d'environ 1,5 à 3 MPa.

L'âme du talon 68 est relativement volumineuse. Par exemple, dans ce mode de réalisation, la section de l'âme fait environ 6 mm². Par conséquent, pour ne pas alourdir le pneumatique on choisira de préférence un matériau dont la densité est inférieure à 2 g/cm³.

En tout état de cause, afin d'alléger le pneu, la section du talon doit être minimisée. Ainsi, il est préférable de limiter la section du talon à moins de 16 mm² et de préférence à moins de 10 mm². Par exemple,pour une roue de périmètre d'environ 1950 mm, une paire de talons ayant chacun une section de 10 mm² réalisés avec un matériau ayant une masse volumique de 1g/cm3 pèse environ 39 g à la paire ce qui n'est pas négligeable dans la masse totale du pneumatique.

A titre d'exemple le talon thermoplastique peut être réalisé en extrusion bi-matière en utilisant du PEBAX 7033 (ARKEMA) pour la zone basse du talon au voisinage de la zone d'appui 65 et du PEBAX 4033 pour la zone supérieure de la chape 63. Le Pebax 7033 a un module d'Young d'environ 380 MPa (50<380<2000), une dureté de 69 Shore D (69>40) et une résistance rupture de 52 MPa alors que le PEBAX 4033 a un module d'environ 80 MPa (50<80<2000) et une dureté de 46 Shore D (46>40) et une résistance rupture de 37 MPa, alors que leur masse volumique est de 1,02 g/cm³.

Si le talon est collé avec la carcasse du pneumatique, il est souhaitable d'incorporer des compatibilisants chimiques adaptés pour assurer une bonne adhésion à l'assemblage ou de coextruder une fine couche d'élastomère autour du talon, ces différentes techniques sont décrites dans le brevet FR 2 729 397.

Dans une variante du premier mode de réalisation, le talon est constitué d'un assemblage de deux matériaux disctincts. L'ensemble épaulement/béquille est alors réalisé dans un premier matériau et la chape dans un deuxième matériau. Les deux matériaux en question peuvent être deux phases d'élastomère et/ou de thermoplastique liées par un compatibilisant bi-phasique comme décrit dans le brevet FR 2 749 018.

D'autres matériaux qui conviennent pour la fabrication de l'âme du talon sont par exemple Hytrel (Dupont de Nemours), Pebax (ARKEMA), Elastolan (BASF Elastomère de polyuréthane), PEHD (Polyéthilène Haute densité), Rilsan (ARKEMA Polyamide 11), Grilamid (EMS Polyamide 12) ou des tissus synthétiques enduits de caoutchouc et vulcanisés. Cette liste n'est pas exhaustive et d'autres matériaux non cités conviennent également.

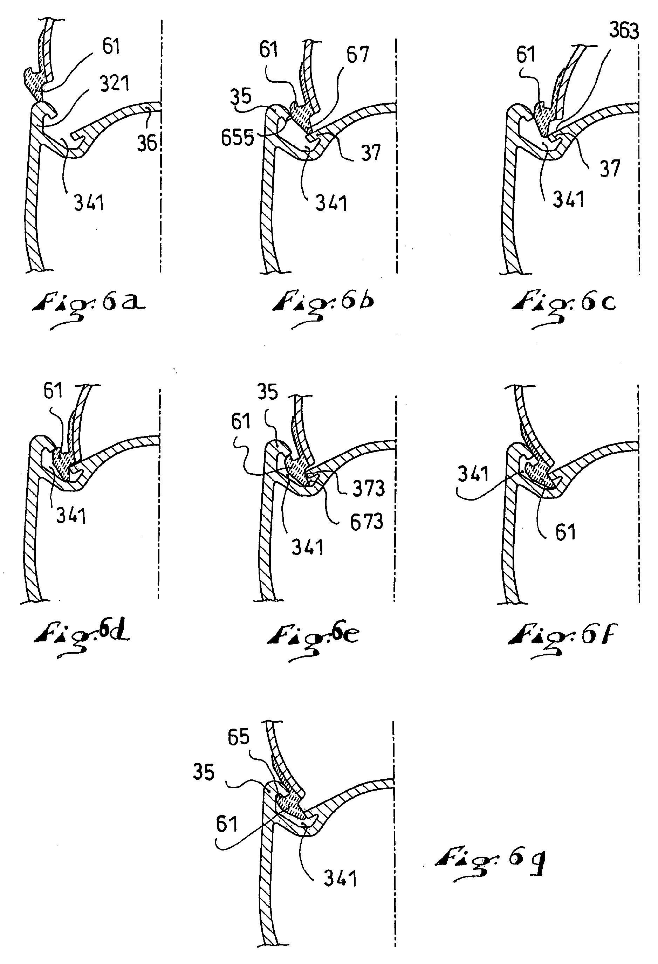

Les figures 6a-6g montrent comment se montent un pneumatique et une jante selon l'invention. Cette série de vues illustrent l'assemblage du talon gauche 61 dans la gouttière gauche 341.

A la figure 6a, la plus grande partie de la circonférence du talon gauche 61 (> 300°) est déjà en place dans la gouttière. Cette mise en place se fait simplement de la même façon que pour n'importe quel pneumatique. Il ne reste plus qu'à faire passer la dernière portion de talon gauche (< 60°) par dessus l'aile gauche 321. Du fait de la faible profondeur de la gouttière gauche, la portion de talon gauche directement à l'opposée de celle qui reste à faire passer sur l'aile, ne peut être déplacée vers l'intérieur de la roue de façon à faciliter le passage sur l'aile. Cependant le module longitudinal du talon, lequel est supérieur à celui de l'enveloppe du pneumatique, est tel qu'il est possible d'élargir le diamètre du talon d'environ 10 mm pour pouvoir faire passer le talon par dessus l'aile.

La figure 6b, illustre l'étape qui suit le passage du talon par dessus l'aile gauche 321. L'élasticité du pneumatique contraint la béquille 67 à venir contre le pavé 36 et la face de guidage 655 de l'appendice à s'appuyer contre le crochet 35.

Il suffit alors de faire pivoter le talon en déformant l'enveloppe du pneumatique jusqu'à se trouver dans la configuration de la figure 6c. Avantageusement, le pavé comporte une surface de glissement 363 sur laquelle glisse la béquille 67. Dans cette configuration, l'épaisseur (e) de l'appendice lui permet de glisser dans l'ouverture jusqu'à ce que la béquille vienne en appui sur le fond de la gouttière comme on le voit à la figure 6d.

La plus grande extension de l'appendice (d) est inférieure à la distance (b) séparant le crochet 35 du fond de la gouttière. Ainsi, lorsque la contrainte déformant le pneu est lâchée, l'élasticité de celui-ci génère une rotation du talon qui fait passer l'épaulement sous le crochet (cf. figure 6e). Le basculement se produit jusqu'à ce que la deuxième surface d'appui 673 de la béquille soit en appui plan contre la deuxième surface de butée 373 du butoir (figure 6f).

Il faut cependant noter qu'à la différence de l'enveloppe du pneumatique, le talon est sensiblement non déformable. Ainsi, pour lui permettre de venir prendre place dans la gouttière, il est nécessaire de changer l'orientation relative du talon par rapport à l'enveloppe.

La position représentée à la figure 6f est une position stable qui est homogène sur toute la périphérie de la roue car le diamètre intérieur du pneu libre est de préférence inférieur de quelques millimètres au diamètre de fond de gouttière, dans cette situation l'étanchéité primaire du pneumatique est assurée et l'utilisateur pourra procéder au gonflage de celui-ci avec une étanchéité primaire permettant un accroissement de la pression du pneu avec le faible débit d'une pompe à main classique malgré les faibles fuites transitoires du talon. Cette étanchéité primaire est beaucoup plus efficace que sur le système tubeless décrit dans le document FR 2 829 969 qui nécessite un débit important pour initier la mise en pression du pneumatique. Dans la position représentée à la figure 6f, la béquille pénètre dans le volume de montage 375 de la gouttière.

La position finale du pneumatique (figure 6g) est obtenue après gonflage, quand l'épaulement 65 vient se glisser sous le crochet 35 sous l'effet de la pression. L'espace 345 est alors comblé par le rebord 654. La première surface d'appui 653 est alors en contact avec la première surface de butée 353 du crochet 35. La deuxième surface d'appui est, elle, en butée contre la deuxième surface de butée.

Le talon du pneumatique selon l'invention n'est pas déformable du fait de son module beaucoup plus élevé que celui du caoutchouc. Cependant un certain nombre de caractéristiques de celui-ci font qu'il est facile de l'insérer dans la gouttière. Tout d'abord, la forme particulière de la section du talon, notamment une forme triangulaire allongée dans laquelle l'extrémité distale que constitue la béquille est plus fine que l'extrémité proximale constituée par l'épaulement. Ensuite, l'aire (St) de la section du talon selon un plan radial est largement inférieure à celle de la gouttière (Sg). L'aire (Sg) est au moins 20% plus grande que (St).

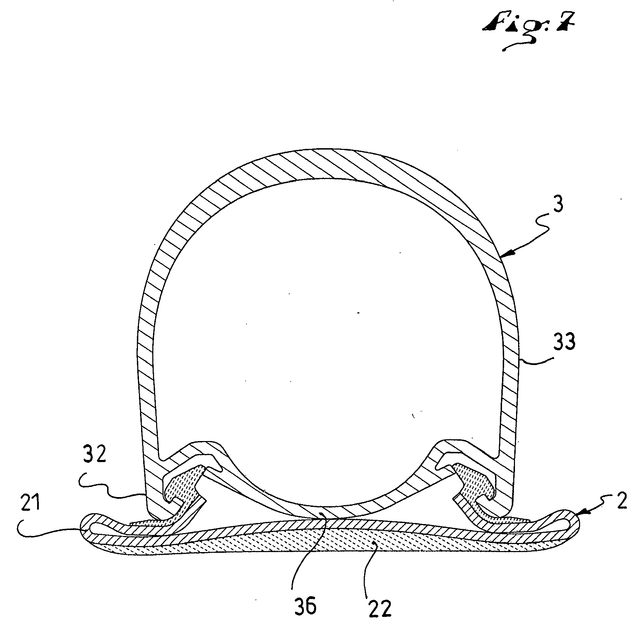

La figure 7 montre la roue en situation de talonnage. Cette situation peut se produire dans le cas où la roue rentre très violemment en contact avec un obstacle et que, ponctuellement, l'air est chassé de la portion où la jante est en contact quasi direct avec l'obstacle. La présence du pavé 36 permet de répartir les efforts auxquels la jante est alors soumise. La jante selon l'invention est donc mieux protégée des effets du talonnage et la probabilité de crevaison par pincement se trouve largement réduite. De même, la jante est mieux protégée des effets d'un roulage à plat. D'autre part, la disposition relative du butoir et du crochet font qu'en cas de talonnage, l'ancrage et l'étanchéité du pneumatique sont renforcés. Ainsi les risques de perte de pression de gonflage et de déjantage sont minimisés.

La roue décrite, à titre d'exemple, dans le premier mode de réalisation est une roue destinée à la pratique sportive du vélo sur route. Il s'agit d'une roue de diamètre extérieur normalisé d'environ 700 mm. La hauteur de la jante est de 25 mm et la distance entre le crochet est de 19 mm. Le pneumatique a un diamètre de 23 mm. Le poids du pneumatique tubeless selon l'invention est de 190 g et celui de la jante est de 400 g. Ces valeurs sont à comparer avec les poids respectifs d'un pneu tubeless et d'une jante de mêmes dimensions et pour la même pratique tels qu'on les fabrique actuellement. Le gain de poids représente 8% du poids de la jante et 30% du poids du pneu de l'art antérieur. Le gain de poids du pneumatique s'explique principalement par la suppression des tringles de module très élevé habituellement utilisées pour les pneumatiques et par la réduction du périmètre de son enveloppe. Le gain de poids de la jante par diminution des épaisseurs de paroi est rendu possible par la faible profondeur des gouttières et la moindre sollicitation des ailes. Le pneu puis la jante étant les éléments d'une roue les plus éloignés de l'axe de rotation, on comprend tout l'intérêt qu'il y a à en réduire le poids et donc l'inertie au maximum.

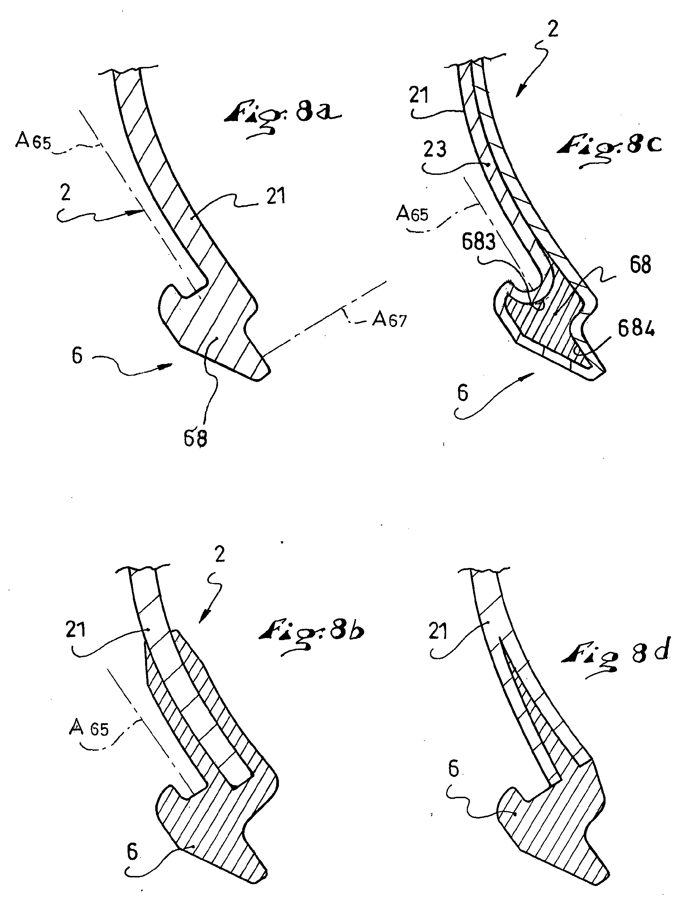

Les figures 8a, 8b, 8c, 8d montrent, en vue schématique, des versions alternatives du talon d'un pneumatique selon l'invention. A la figure 8a, le talon est monobloc avec l'enveloppe du pneumatique, le module du matériau est donc de préférence évolutif entre l'enveloppe 21 et l'âme 68 afin de conférer une rigidité et résistance suffisante du talon et une souplesse nécessaire de l'enveloppe. A la figure 8b, le talon est fixé à l'enveloppe par couture, soudure et/ou collage d'une double chape. La figure 8d présente une version alternative dans laquelle la chape 63 du talon s'insère en sandwich à l'intérieur de l'enveloppe 21. Même si cette figure schématique ne décrit pas en détail la construction de l'enveloppe 21, on doit comprendre que la chape s'insère entre deux plis de la carcasse du pneumatique. Les versions alternatives représentées aux figures 8b et 8d sont particulièrement intéressantes car on augmente ainsi la longueur de l'interface de liaison sans augmenter trop la hauteur de la chape. Aproximativement, la longueur d'interface de liaison mesurée dans un plan radial est égale à deux fois la hauteur de la chape. La figure 8c représente un pneumatique dont la partie basse de l'enveloppe comporte deux pans d'un même panneau 23 de tissu replié sur lui-même. De façon connue, le tissu est enduit de caoutchouc pour garantir l'étanchéité et la solidité. Une âme 68 est noyée entre les deux pans de tissus. L'âme 68 comporte une première zone d'appui 683 définissant un appui sensiblement perpendiculaire à l'enveloppe 21. Cette première zone d'appui présente, dans un plan radial, une forme concave. Cette forme concave est centrée sur l'axe (A₆₅), lequel est sensiblement tangent à l'enveloppe 21. L'âme 68 présente également une deuxième zone d'appui 684 qui est sensiblement orientée dans la direction de l'enveloppe 21. L'âme est réalisée dans un matériau dont le module est compris entre 100 et 2000 MPa.

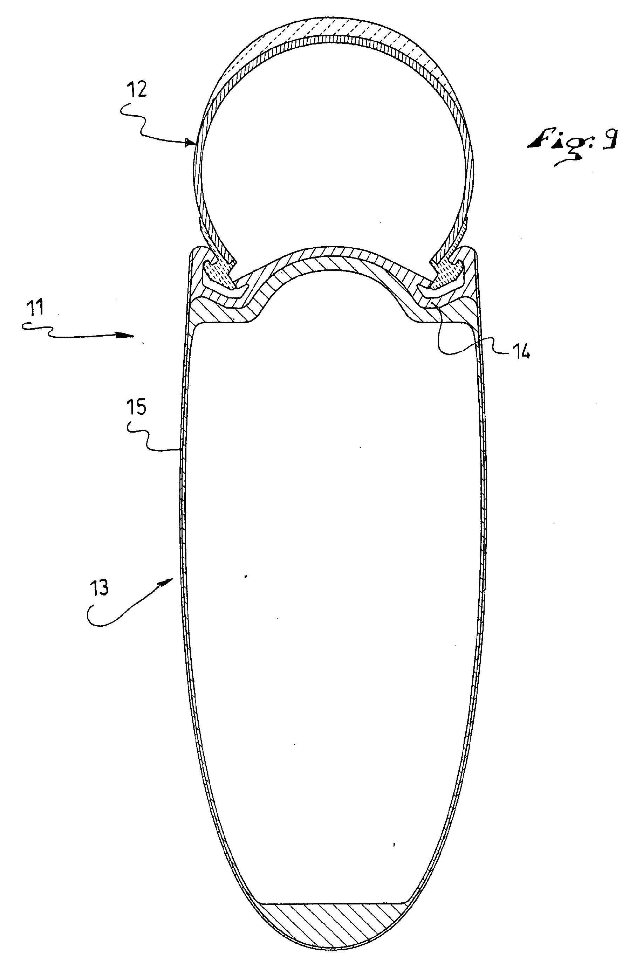

La figure 9 représente un deuxième mode de réalisation d'une jante selon l'invention. Il s'agit d'une roue 11 aérodynamique. Cette roue comprend une jante haute 13, c'est-à-dire une jante dont la hauteur est supérieure à 50 mm. La jante comprend un cerceau 14 assurant la fonction d'interface avec le pneumatique 12 et d'un corps principal 15 de la jante. Le cerceau 14 est réalisé dans un alliage d'aluminium, par exemple par extrusion d'un profilé rectiligne puis par cintrage et soudure de ce profilé. Le profil intérieur du cerceau 14 est identique à celui de la jante 3 du premier mode de réalisation de l'invention et ne sera pas décrit en détail dans ce paragraphe. Le corps principal 15 est réalisé en matière composite.

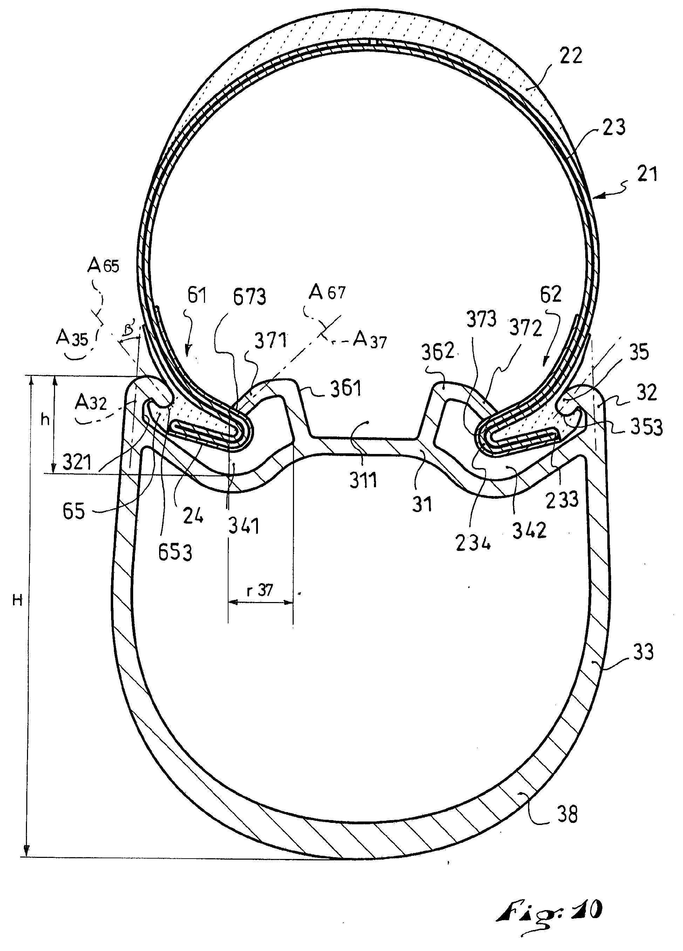

La figure 10 représente un troisième mode de réalisation d'une roue selon l'invention. Elle comprend une jante 3 qui est constituée de manière connue par un pont inférieur 38, un pont supérieur 31, de deux parois latérales et de deux ailes latérale 32. Conformément à l'invention, les ailes latérales 32 se prolongent par un crochet 35 qui est orienté vers le bas et vers l'intérieur de la jante et à l'extrémité duquel se trouve la première surface de butée 353.

La première surface de butée 353 est une surface convexe qui a, dans le plan radial, un profil correspondant à un arc de cercle. Comme dans les modes de réalisation précédents, on peut définir un axe (A₃₅) qui correspond à la direction perpendiculaire à la première surface de butée 353. Dans ce cas, comme la première surface de butée n'est pas, dans un plan radial, un segment de droite, l'axe (A₃₅) est la bissectrice de la corde de l'arc de cercle.

De préférence, la corde de l'arc de cercle de la surface 353 est sensiblement perpendiculaire au crochet 35, si bien que le crochet 35 est sensiblement orienté selon l'axe (A₃₅). L'axe (A₃₅) fait avec l'axe d'orientation (A₃₂) de l'aile latérale 32 un angle β (beta') compris entre 10° et 80°.

Le pont supérieur 31, comprend un pavé 36 se composant de deux demi-pavés, un demi-pavé gauche 361 et un demi-pavé droit 362. Le demi-pavé gauche 361 se termine, à sa droite, par un butoir gauche 371 et le demi-pavé droit 362 se termine par un butoir droit 372. La surface frontale des butoirs 371 et 372 constituent une deuxième surface de butée 373. L'axe (A₃₇) est dans le plan radial la direction perpendiculaire à la deuxième surface de butée 373. L'axe (A₃₇) fait avec l'axe (A₃₅) du crochet un angle égale à 80°. Une gorge centrale 311 sépare le demi-pavé droit 361 du demi-pavé gauche 362.

Dans une version alternative les deux demi-pavés sont des éléments rapportés sur le pont supérieur. Dans ce cas, les butoirs peuvent être réalisés dans un matériau distinct de celui de la jante.

Une gouttière gauche 341 est délimitée par le crochet gauche 351, la face interne de l'aile gauche 321, le pont supérieur 31 et le pavé gauche 361. L'ouverture de la gouttière gauche 341 se fait vers le haut entre la première et la deuxième surface de butée 353 et 373. Une gouttière gauche 342 est symétriquement délimitée entre le crochet droit 352 et le demi-pavé droit 362.

Le pneumatique 2 selon le troisième mode de réalisation de l'invention comprend une enveloppe, ou carcasse 21 sur laquelle est vulcanisée ou collée une bande de roulement 22. L'enveloppe 21 est principalement constituée d'un panneau 23 replié sur lui-même, une première fois, au niveau du talon droit 62 et au niveau du talon gauche 61. Le premier repliage est référencé 233 sur la figure. L'enveloppe 21 est à nouveau repliée sur elle une deuxième fois au niveau des talons. A l'intérieur de ce deuxième repliage 234, est inséré le talon 6. Un renfort 24 recouvre le panneau 23 au niveau du talon.

Le talon 6 est constitué par une âme 68 partiellement recouverte par l'enveloppe 21 du pneumatique. Le talon comprend un épaulement 65 dont une surface externe constitue une première surface d'appui 653. Cette première surface d'appui a une forme complémentaire à celle de la première surface de butée 353. Dans le cas présent, cette surface est concave à profil circulaire. Dans le plan radial de coupe, elle est centrée sur l'axe (A₆₅), lequel se confond avec l'axe (A₃₅) lorsque le pneumatique est en place dans la jante et gonflé.

La deuxième surface d'appui 673 est constituée par une portion basse de la face interne du pneu. Plus précisément, c'est le renfort 24 qui vient au contact de la deuxième surface de butée 373.

Comme dans les modes de réalisation précédemment décrits, le talon comprend une chape 63 qui sert à la fixation sur l'enveloppe 21. Cette chape est vulcanisée ou collée et cousue aux panneaux internes 232 et externe 231.

Dans ce mode de réalisation, l'épaisseur (e) du talon qui vaut 2,9 mm, est sensiblement égale, quoique très légèrement inférieure à l'amplitude de l'ouverture de la gouttière (a).

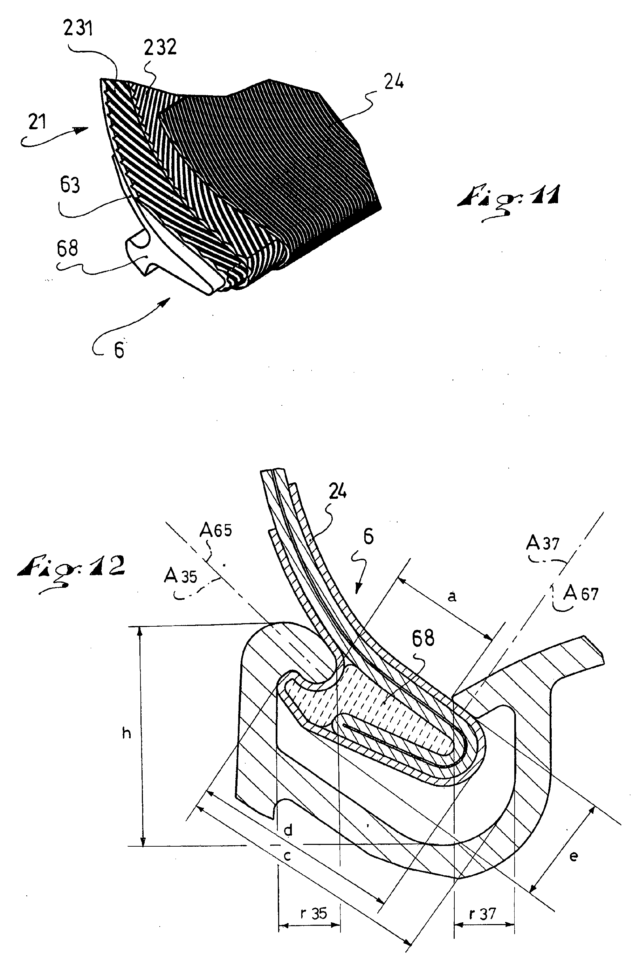

La figure 11 représente en perspective éclatée quelques détails de la construction du pneumatique. On y voit l'âme 68 du talon 6 qui est collée au panneau externe 231. L'enveloppe 21 est également constituée par le panneau interne 232 ainsi que par le renfort 24. Le panneau 23 qui sert à la fabrication de l'enveloppe 21 est un panneau comportant une nappe de fibres textiles enduites de caoutchouc. Les fibres sont parallèles entre elles. Dans le panneau externe 231, les fibres font un angle de -45° avec le plan radial. Lorsque le panneau 23 est replié sur lui-même, l'orientation des fibres s'inverse si bien que les fibres du panneau interne 232 font avec le plan radial un angle de +45°. Cette disposition des fibres entre les deux panneaux interne et externe est particulièrement optimale pour un bon compromis entre souplesse, résistance et poids du pneumatique.

Conformément à l'une des modalités de réalisation de l'invention, le pneumatique comprend en outre un renfort 24 dont les fibres font un angle très faible avec le plan radial. De préférence cet angle est nul, on dit alors que les fibres du renfort 24 sont radiales. Du fait de l'orientation de ses fibres, le renfort 24 améliore ainsi la rigidité et la résistance à la flexion, dans un plan radial, du talon 6.

L'âme du talon est réalisée dans un matériau ayant un module compris entre 100 et 2000 MPa, ou par enroulement d'une petite nappe de tissu enduit de caoutchouc ayant des fibres ayant aussi un angle très faible avec le plan radial, conférant ainsi une très bonne rigidité et une résistance transversale au talon, tout en limitant la rigidité longitudinale pour facilité le montage du pneu.

Le module équivalent du talon peut être calculé comme vu précédemment en mesurant la déformation du talon et en calculant le module équivalent d'un talon de géométrie identique ayant la même déformation.

La figure 12 représente une version alternative du talon de pneumatique du troisième mode de réalisation de l'invention. Dans cette version, le talon 6 ne comprend pas de chape, et l'âme 68 est intégralement recouverte par le renfort radial 24. L'épaisseur du talon (e) fait dans cette version 2,9 mm et la plus grande extension (d) 5,3 mm. La jante associée à ce pneumatique est légèrement modifiée. L'ouverture (a) de la gouttière fait 2,9 mm, la plus grande extension (c), 6,5 mm et la profondeur (h), 5,85 mm.

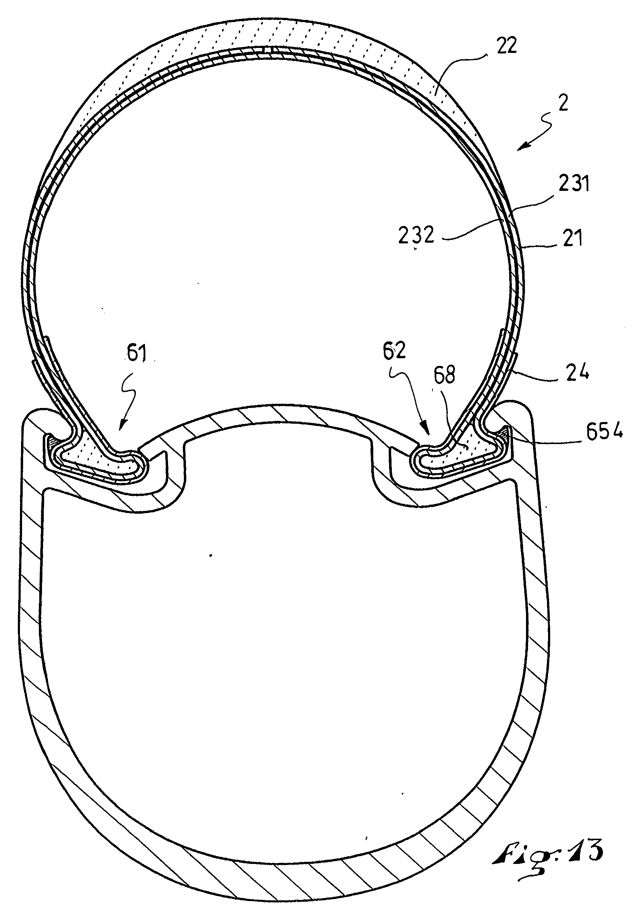

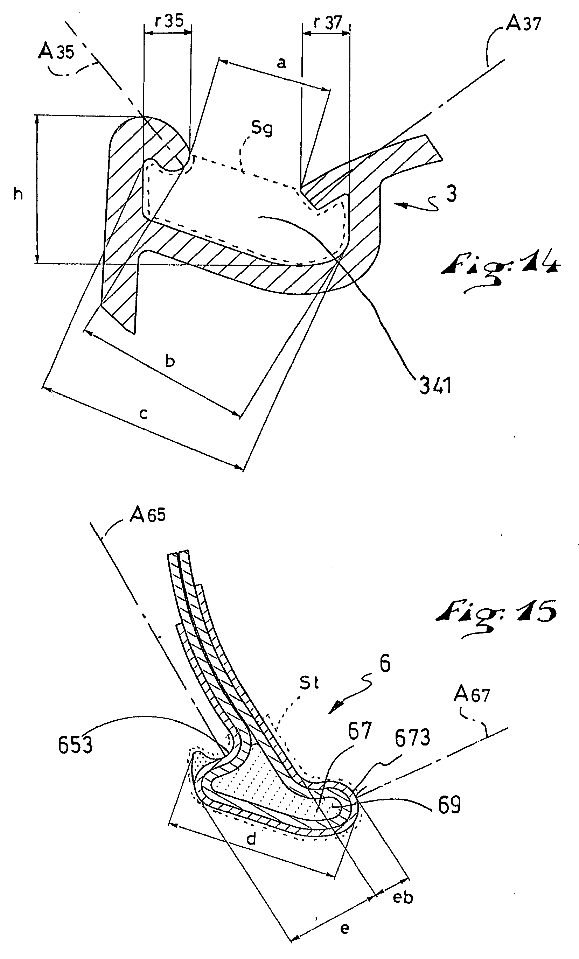

Les figures 13, 14 et 15 décrivent un quatrième mode de réalisation de l'invention. Tous les éléments de ce mode de réalisation qui sont communs aux modes de réalisation précédents, ou à certains d'entre eux, ne seront pas décrits à nouveau en référence à ce quatrième mode de réalisation. On insistera donc dans ce qui suit sur les points de différences.

Le pneumatique 2 comprend une enveloppe 21 constituée d'un panneau de fibres noyées dans une couche de caoutchouc. Le panneau est replié sur lui-même à chacune des deux extrémités du tore ouvert. Ainsi l'enveloppe est constituée par un panneau interne 232 et un panneau externe 231. Les deux bords libres du panneau sont joints l'un à l'autre au sommet du pneu sous la bande de roulement 22.

Une âme 68 est insérée entre les panneaux internes 232 et externes 231 de chaque côté afin de donner partiellement forme au talon gauche 61 et talon droit 62. Le talon comprend également un renfort radial 24 et un rebord 654 collé sur le renfort radial 24 au niveau de l'épaulement du talon.

Le renfort radial 24 comprend une pluralité de fibres parallèles et orientées radialement et il améliore grandement le module transversal équivalent des talons 6. Le rebord 654 est peu sollicité en flexion, c'est pourquoi, on pourra se satisfaire de le laisser en dehors du renfort radial 24. Le rebord pourra notamment être réalisé simplement en caoutchouc.

Le talon 6 du quatrième mode de réalisation a conformément à l'invention une forme allongée sensiblement triangulaire dans la mesure où l'épaisseur de celui-ci au niveau de l'épaulement 65 est plus importante que celle au niveau de la béquille 67. De plus, la béquille se projette vers l'intérieur du pneumatique. Un bourrelet 69 fait saillie pour se rapprocher de l'axe médian (M). La deuxième surface d'appui 673, qui est ménagée sur ce bourrelet 69 est convexe. Dans un plan radial, cette surface est un arc de cercle.

La plus grande extension du talon (d) vaut 4,9 mm tandis que son épaisseur (e) 2,8 mm. L'épaisseur du bourrelet 69 vaut 1 mm. L'aire (St) de la section du talon vaut environ 9 mm². Comme on le verra plus loin, cette forme particulière et ce dimensionnement permettent d'optimiser le profil des gouttières.

La jante 3 du quatrième mode de réalisation de l'invention se distingue des versions précédemment décrites par une profondeur encore réduite, puisque la profondeur (h) de la gouttière fait 4,4 mm sans pour autant être beaucoup plus large. La plus grande extension (c) de la gouttière mesurée entre l'extrémité supérieure et extérieure de celle-ci, sous le crochet, et le fond de celle-ci, côté intérieur, vaut 6,2 mm. L'ouverture (a), qui vaut 3,2 mm est en revanche plus importante pour faciliter l'introduction du talon, même dans une position inclinée de ce-dernier. L'aire (Sg) de la section de la gouttière vaut environ 12 mm²

La présence du bourrelet 69, sur lequel est ménagéE la deuxième surface d'appui 673 rend possible de diminuer la profondeur (h) de la gouttière. Etant donné que la profondeur de jante est faible, les contraintes dans le pont supérieur seront grandement diminuées. Alors les épaisseurs de paroi peuvent être encore diminuées et, de plus, comme la jante n'est quasiment plus sollicitée en compression sous l'effet de la pression de l'air, on peut véritablement alléger globalement la section de la jante. A titre de comparaison, l'ETRTO (19TC tubeless ATB cycle tyres 27.4) préconise pour des pneus à tringles dans des conditions d'utilisations similaires, une profondeur totale minimum (cote G+H) de 5,85+3,2=9,05 mm qui nécessite des épaisseurs de paroi plus élevées que l'invention pour supporter notamment les contraintes de flexion plus élevées dues à la pression de gonflage.

Dans un mode de réalisation alternatif du quatrième mode de réalisation (non représenté), le bourrelet 69 est comme le rebord 654, placé à l'extérieur du renfort radial 24. Il est par exemple réalisé en caoutchouc car il ne travaille qu'en compression et n'est pas soumis à de la flexion.

Dans un autre mode de réalisation de l'invention (non représenté), les butoirs sont ménagés sur une pièce distincte du pont supérieur. Cette pièce peut être fixée sur le pont supérieur par la suite.

Les roues des quelques modes de réalisation décrits ici à titres d'exemples correspondent typiquement à une utilisation sur route. Bien entendu, l'invention s'applique également aux roues prévues pour la pratique du VTT, qui même si elles sont souvent utilisées avec des pressions de gonflage plus basses, ont des pneumatiques de largeur plus importante (jusqu'à 60 mm). Par conséquent, les tensions linéiques de l'enveloppe d'un pneumatique pour VTT sont sensiblement du même ordre que celles d'un pneu de route. La conception des talons telle qu'elle est ici décrite est donc parfaitement transposable.

Les modes de réalisation décrits ne mentionnent pas de chambre à air car l'invention s'applique sans discrimination aux roues équipées de chambres à air et à celle qui n'en utilisent pas (tubeless).

Il peut être souhaitable d'aménager un trou ou un petit canal dans la zone du butoir sur la jante ou sur le pneumatique, afin que la pression de l'air dans les gouttières soit identique à celle de l'enceinte du pneumatique et donc la pression du pneumatique n'évolue pas dans le temps si une légère fuite très lente venait à pressuriser progressivement les gouttières et à réduire la pression du pneumatique.

## Revendications

1. Pneumatique (2) pour cycle comportant une enveloppe (21) et deux talons (6) placés sur les deux bords latéraux de l'enveloppe, ledit pneumatique ayant la forme d'un tore ouvert et définissant un volume intérieur; l'un au moins des deux talons (6) présentant un épaulement (65) faisant saillie vers le côté extérieur depuis la portion de l'enveloppe qui lui est adjacente, ledit épaulement étant placé, selon un plan radial, à une première extrémité du talon,
- ledit épaulement (65) comportant à sa surface extérieure une première surface d'appui (653) et un rebord (654), ladite première surface d'appui étant placée entre ledit rebord et ladite enveloppe et ladite surface d'appui étant placée en retrait par rapport audit rebord,
- ledit talon (6) comportant une béquille (67) placée selon un plan radial à une deuxième extrémité du talon et comportant une deuxième surface d'appui (673) placée sur le côté intérieur, **caractérisé**
- **en ce que** le module longitudinal du talon, ou le module équivalent des différents éléments constituant le talon est inférieur à 2000 MPa,
- et **en ce que** le module transversal du talon ou le module équivalent des différents éléments constituant le talon est supérieur à 50 Mpa.

2. Pneumatique (2) selon la revendication 1, **caractérisé en ce que**, dans un plan radial, la direction (A₆₅) normale à la première surface d'appui est sensiblement tangente à l'enveloppe (21).

3. Pneumatique (2) selon la revendication précédente, **caractérisé en ce que** la direction normale (A₆₇) à la deuxième surface d'appui (673) fait avec la direction normale (A₆₅) de la première surface d'appui un angle compris entre 75° et 105°.

4. Pneumatique (2) selon l'une des revendications précédentes, **caractérisé en ce que** la profondeur du retrait de la première surface d'appui par rapport au rebord (654) de l'épaulement supérieure à 0,2mm.

5. Pneumatique (2) selon la revendication précédente, **caractérisé en ce que**, selon un plan radial, le talon a une section allongée dans laquelle la plus grande extension du talon est supérieure à 1,6 fois son épaisseur.

6. Pneumatique (2) selon la revendication précédente, **caractérisé en ce que** le talon comporte une âme annulaire (68) dont le module longitudinal est inférieur à 2000 MPa et dont le module transversal est supérieur à 50 MPa.

7. Pneumatique (2) selon la revendication précédente, **caractérisé en ce que** l'enveloppe (21) comprend au moins un panneau de fibres noyées dans un caoutchouc; **en ce que** ledit panneau enveloppe au moins partiellement ladite âme et **en ce que** le module transversal équivalent du talon ainsi constitué de l'âme et du panneau est supérieur à 50 MPa.

8. Pneumatique (2) selon la revendication précédente, **caractérisé en ce que** le pneumatique comporte un renfort radial enveloppant, au moins partiellement, ladite âme (68); ledit renfort radial comportant une pluralité de fibres parallèles les unes aux autres et orientées dans un plan radial.

9. Pneumatique (2) selon l'une des revendications 6 à 8, **caractérisé en ce que** l'âme est réalisée en un matériau dont la densité est inférieure à 2.

10. Pneumatique selon l'une des revendication 1 à 6, **caractérisé en ce que** le talon est une pièce indépendante de l'enveloppe qui est solidarisée à cette dernière par couture, collage ou soudure.

11. Pneumatique selon la revendication précédente, **caractérisé en ce que** le talon comporte une chape servant à le fixer sur l'enveloppe et **en ce que** ladite chape présente dans un plan radial, une hauteur comprise entre 4 et 15 mm, de préférence comprise entre 6 et 13 mm.

12. Pneumatique selon la revendication précédente, **caractérisé en ce que** la chape du talon s'insère en sandwich à l'intérieur de l'enveloppe.

13. Pneumatique (2) selon l'une des revendications précédentes, **caractérisé en ce que** le matériau du talon a un module compris entre 50 et 2000 MPa, une dureté shore D supérieure à 40 et une densité inférieure à 2.

14. Pneumatique (2) selon l'une des revendications précédentes, **caractérisé en ce que** la rigidité radiale est inférieure à 8 daN/mm.

15. Roue comportant un pneu selon l'une des revendications 1 à 14.

## Patentansprüche

1. Fahrrad-Luftreifen (2), der einen Mantel (21) und zwei Wülste (6) aufweist, die an den zwei Seitenrändern des Mantels angeordnet sind, wobei der Luftreifen die Form eines offenen Torus hat und ein Innenvolumen definiert; wobei mindestens einer der zwei Wülste (6) eine Schulter (65) hat, die von dem ihm benachbarten Mantelabschnitt nach außen vorsteht, wobei die Schulter gemäß einer radialen Ebene an einem ersten Ende des Wulsts angeordnet ist,
- wobei die Schulter (65) an ihrer Außenfläche eine erste Auflagefläche (653) und eine Randleiste (654) aufweist, wobei die erste Auflagefläche zwischen der Randleiste und dem Mantel angeordnet ist, und die Auflagefläche bezüglich der Randleiste zurückgesetzt angeordnet ist,
- wobei der Wulst (6) eine Stütze (67) aufweist, die gemäß einer radialen Ebene an einem zweiten Ende des Wulsts angeordnet ist und eine zweite Auflagefläche (673) aufweist, die auf der Innenseite angeordnet ist,
**dadurch gekennzeichnet,**
- **dass** der Längsmodul des Wulsts oder der äquivalente Modul der verschiedenen den Wulst bildenden Elemente niedriger als 2000 MPa ist,
- und **dass** der Quermodul des Wulsts oder der äquivalente Modul der verschiedenen den Wulst bildenden Elemente höher als 50 MPa ist.

2. Luftreifen (2) nach Anspruch 1, **dadurch gekennzeichnet, dass** in einer radialen Ebene die Richtung (A₆₅) normal zur ersten Auflagefläche im Wesentlichen den Mantel (21) tangiert.

3. Luftreifen (2) nach dem vorhergehenden Anspruch, **dadurch gekennzeichnet, dass** die Richtung (A₆₇) normal zur zweiten Auflagefläche (673) mit der Normalenrichtung (A₆₅) der ersten Auflagefläche einen Winkel zwischen 75° und 105° bildet.

4. Luftreifen (2) nach einem der vorhergehenden Ansprüche, **dadurch gekennzeichnet, dass** die Tiefe der Rücksetzung der ersten Auflagefläche bezüglich der Randleiste (654) der Schulter größer ist als 0,2 mm.

5. Luftreifen (2) nach dem vorhergehenden Anspruch, **dadurch gekennzeichnet, dass** gemäß einer radialen Ebene der Wulst einen länglichen Querschnitt hat, in dem die größte Ausdehnung des Wulsts größer als das 1,6-Fache seiner Dicke ist.

6. Luftreifen (2) nach dem vorhergehenden Anspruch, **dadurch gekennzeichnet, dass** der Wulst einen ringförmigen Kern (68) aufweist, dessen Längsmodul niedriger als 2000 MPa und dessen Quermodul höher als 50 MPa ist.

7. Luftreifen (2) nach dem vorhergehenden Anspruch, **dadurch gekennzeichnet, dass** der Mantel (21) mindestens eine Bahn von in einen Kautschuk eingebetteten Fasern enthält; dass die Bahn den Kern zumindest teilweise umhüllt, und dass der äquivalente Quermodul des so aus dem Kern und der Bahn gebildeten Wulsts höher als 50 MPa ist.

8. Luftreifen (2) nach dem vorhergehenden Anspruch, **dadurch gekennzeichnet, dass** der Luftreifen eine radiale Verstärkung aufweist, die den Kern (68) zumindest teilweise umhüllt; wobei die radiale Verstärkung eine Vielzahl von zueinander parallelen und in einer radialen Ebene ausgerichteten Fasern aufweist.

9. Luftreifen (2) nach einem der Ansprüche 6 bis 8, **dadurch gekennzeichnet, dass** der Kern aus einem Material hergestellt ist, dessen Dichte unter 2 liegt.

10. Luftreifen nach einem der Ansprüche 1 bis 6, **dadurch gekennzeichnet, dass** der Wulst ein vom Mantel unabhängiges Bauteil ist, das mit diesem letzteren durch Nähen, Kleben oder Schweißen fest verbunden wird.

11. Luftreifen nach dem vorhergehenden Anspruch, **dadurch gekennzeichnet, dass** der Wulst eine Abdeckung aufweist, die dazu dient, ihn am Mantel zu befestigen, und dass die Abdeckung in einer radialen Ebene eine Höhe zwischen 4 und 15 mm, vorzugsweise zwischen 6 und 13 mm, aufweist.

12. Luftreifen nach dem vorhergehenden Anspruch, **dadurch gekennzeichnet, dass** die Abdeckung des Wulsts sandwichartig ins Innere des Mantels eingefügt wird.

13. Luftreifen (2) nach einem der vorhergehenden Ansprüche, **dadurch gekennzeichnet, dass** das Material des Wulsts einen Modul zwischen 50 und 2000 MPa, eine Shore-D-Härte höher als 40 und eine Dichte niedriger als 2 hat.

14. Luftreifen (2) nach einem der vorhergehenden Ansprüche, **dadurch gekennzeichnet, dass** die radiale Steifigkeit niedriger als 8 daN/mm ist.

15. Rad, das einen Reifen nach einem der Ansprüche 1 bis 14 aufweist.

## Claims

1. Pneumatic tyre (2) for a cycle comprising a tyre casing (21) and two beads (6) placed on the two lateral edges of the tyre casing, the said pneumatic tyre having the shape of an open torus and defining an interior volume; at least one of the two beads (6) having a shoulder (65) projecting towards the outside from the portion of the tyre casing adjacent to it, said shoulder being positioned, in a radial plane, at a first end of the bead,
- the said shoulder (65) comprising at its exterior surface a first bearing surface (653) and a lip (654), the said first bearing surface being positioned between the said lip and the said tyre casing and the said bearing surface being positioned set back from the said lip,
- the said bead (6) comprising a prop (67) positioned in a radial plane at a second end of the bead and comprising a second bearing surface (673) positioned on the interior side, **characterized**
- **in that** the longitudinal modulus of the bead, or the equivalent modulus of the various elements that make up the bead is less than 2000 MPa,
- and **in that** the transverse modulus of the bead or the equivalent modulus of the various elements that make up the bead is greater than 50 Mpa.

2. Pneumatic tyre (2) according to Claim 1, **characterized in that**, in a radial plane, the direction (A₆₅) normal to the first bearing surface is substantially tangential to the tyre casing (21).

3. Pneumatic tyre (2) according to the preceding claim, **characterized in that** the direction (A₆₇) normal to the second bearing surface (673) makes, with the normal direction (A₆₅) of the first bearing surface, an angle comprised between 75° and 105°.

4. Pneumatic tyre (2) according to one of the preceding claims, **characterized in that** the depth to which the first bearing surface is set back with respect to the lip (654) of the shoulder is greater than 0.2 mm.

5. Pneumatic tyre (2) according to the preceding claim, **characterized in that**, in a radial plane, the bead has an elongate cross section in which the longest extension of the bead is greater than 1.6 times its thickness.

6. Pneumatic tyre (2) according to the preceding claim, **characterized in that** the bead comprises an annular core (68) of which the longitudinal modulus is less than 2000 MPa and of which the transverse modulus is greater than 50 MPa.

7. Pneumatic tyre (2) according to the preceding claim, **characterized in that** the tyre casing (21) comprises at least one panel of fibres embedded in a rubber; **in that** the said panel at least partially envelops the said core and **in that** the equivalent transverse modulus of the bead thus made up of the core and of the panel is greater than 50 MPa.

8. Pneumatic tyre (2) according to the preceding claim, **characterized in that** the pneumatic tyre comprises a radial reinforcement at least partially enveloping the said core (68); the said radial reinforcement comprising a plurality of fibres parallel to one another and oriented in a radial plane.

9. Pneumatic tyre (2) according to one of Claims 6 to 8, **characterized in that** the core is made from a material of which the density is less than 2.

10. Pneumatic tyre according to one of Claims 1 to 6, **characterized in that** the bead is a part independent of the tyre casing and secured to the latter by stitching, bonding or welding.

11. Pneumatic tyre according to the preceding claim, **characterized in that** the bead comprises an end fitting used to attach it to the tyre casing and **in that** the said end fitting has, in a radial plane, a height comprised between 4 and 15 mm, preferably comprised between 6 and 13 mm.

12. Pneumatic tyre according to the preceding claim, **characterized in that** the end fitting of the bead is sandwiched inside the tyre casing.

13. Pneumatic tyre (2) according to one of the preceding claims, **characterized in that** the material of the bead has a modulus comprised between 50 and 2000 MPa, a Shore D hardness in excess of 40 and a density of less than 2.

14. Pneumatic tyre (2) according to one of the preceding claims, **characterized in that** the radial stiffness is less than 8 daN/mm.

15. Wheel comprising a clincher tyre according to one of Claims 1 to 14.
